(19) Europäisches Patentamt / European Patent Office / Office européen des brevets

(11) **EP 1 608 939 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
***G01F 1/66*** (2006.01)

(21) Anmeldenummer: **04724595.6**

(22) Anmeldetag: **31.03.2004**

(86) Internationale Anmeldenummer:
**PCT/EP2004/003403**

(87) Internationale Veröffentlichungsnummer:
**WO 2004/088252 (14.10.2004 Gazette 2004/42)**

(54) **VORRICHTUNG ZUR BESTIMMUNG UND/ODER ÜBERWACHUNG DES VOLUMEN- UND/ ODER MASSENSTROMS EINES MEDIUMS**

DEVICE FOR DETERMINATION AND/OR MONITORING OF THE VOLUMETRIC AND/OR MASS FLOW OF A MEDIUM

DISPOSITIF PERMETTANT DE DETERMINER ET/OU DE SURVEILLER LE DEBIT VOLUMETRIQUE ET/OU MASSIQUE D'UN MILIEU

(84) Benannte Vertragsstaaten:
**AT BE BG CH CY CZ DE DK EE ES FI FR GB GR HU IE IT LI LU MC NL PL PT RO SE SI SK TR**

(30) Priorität: **01.04.2003 DE 10314916**

(43) Veröffentlichungstag der Anmeldung:
**28.12.2005 Patentblatt 2005/52**

(73) Patentinhaber: **Endress + Hauser Flowtec AG 4153 Reinach BL 1 (CH)**

(72) Erfinder:
• **WIEST, Achim**
  **79576 Weil am Rhein (DE)**
• **STRUNZ, Torsten**
  **CH-4056 Basel (CH)**
• **BERGER, Andreas**
  **CH-4153 Reinach (CH)**

(74) Vertreter: **Andres, Angelika Maria et al Endress+Hauser (Deutschland) AG+Co. KG PatServe Colmarer Strasse 6 79576 Weil am Rhein (DE)**

(56) Entgegenhaltungen:
**EP-A- 1 235 056     WO-A-02/39069**
**US-A- 3 913 386**

**Beschreibung**

Die Erfindung bezieht sich auf eine Vorrichtung zur Bestimmung und/oder Überwachung des Volumen- und/ oder Massenstroms eines Mediums in einem Behältnis, insbesondere in einem Rohr, mit zumindest einem Ultraschall-wandler, der Ultraschall-Meßsignale aussendet und/oder empfängt, mit einem dem Ultraschallwandler zugeordneten Koppelelement, über das die Ultraschall-Meßsignale unter einem vorgegebenen Einkoppel- bzw. Auskoppelwinkel in das Behältnis eingekoppelt bzw. aus dem Behältnis ausgekoppelt werden, und mit einer Regel-/Auswerteeinheit, die anhand der Meßsignale bzw. anhand von Meßdaten, die aus den Meßsignalen abgeleitet sind, den Volumen- und/oder den Massenstrom des in dem Meßrohr strömenden Mediums ermittelt.

Ultraschall-Durchflußmeßgeräte werden vielfach in der Prozeß- und Automatisierungstechnik eingesetzt. Sie erlauben es, den Volumen- und/oder Massenstrom eines Mediums in einer Rohrleitung berührungslos zu bestimmen.

Die bekannten Ultraschall-Durchflußmeßgeräte arbeiten entweder nach dem Doppler-Prinzip oder nach dem Laufzeitdifferenz-Prinzip. Beim LaufzeitDifferenz-Prinzip wird die unterschiedliche Laufzeit von Ultraschall-Meßsignalen in Strömungsrichtung und entgegen der Strömungsrichtung des Mediums ausgewertet. Hierzu werden die Ultraschall-Meßsignale von den Ultraschallwandlern wechselweise in Strömungsrichtung und entgegen der Strömungsrichtung des Mediums ausgesendet bzw. empfangen. Aus der Laufzeitdifferenz der Ultraschall-Meßsignale läßt sich die Fließgeschwindigkeit und damit bei bekanntem Durchmesser der Rohrleitung der Volumendurchfluß bzw. bei bekannter oder gemessener Dichte des Mediums der Massendurchfluß bestimmen.

Beim Doppler-Prinzip werden Ultraschall-Meßsignale mit einer vorgegebenen Frequenz in das strömende Medium eingekoppelt. Die in dem Medium reflektierten Ultraschall-Meßsignale werden ausgewertet. Anhand einer zwischen dem eingekoppelten und dem reflektierten Ultraschall-Meßsignal auftretenden Frequenzverschiebung läßt sich ebenfalls die Fließgeschwindigkeit des Mediums bzw. der Volumen und/oder Massenstrom bestimmen.

Der Einsatz von Durchflußmeßgeräten, die nach dem Doppler-Prinzip arbeiten, ist nur möglich, wenn in dem Medium Luftbläschen oder Verunreinigungen vorhanden sind, an denen die Ultraschall-Meßsignale reflektiert werden. Damit ist der Einsatz derartiger Ultraschall-Durchflußmeßgeräte im Vergleich zu den Ultraschall-Durchflußmeßgeräten, die nach dem LaufzeitDifferenz-Prinzip arbeiten, ziemlich eingeschränkt.

Hinsichtlich der Typen von Meßgeräten wird unterschieden zwischen Ultraschall-Durchflußmeßaufnehmern, die in die Rohrleitung eingesetzt werden, und Clamp-On Durchflußmeßgeräten, bei denen die Ultraschallwandler von außen an die Rohrleitung mittels eines Spannverschlusses angepreßt werden. Clamp-On Durchflußmeßgeräte sind beispielsweise in der EP 0 686 255 B1, der US-PS 4,484,478 oder der US-PS 4,598,593 beschrieben.

Bei beiden Typen von Ultraschall-Durchflußmeßgeräten werden die Ultraschall-Meßsignale unter einem vorgegebenen Winkel in die Rohrleitung bzw. in das Meßrohr, in der/ in dem sich das strömende Medium befindet, eingestrahlt und/oder empfangen. Um eine optimale Impedanzanpassung zu erreichen, werden die Ultraschall-Meßsignale über einen Vorlaufkörper bzw. einen Koppelkeil in die Rohrleitung eingekoppelt bzw. aus der Rohrleitung ausgekoppelt. Hauptbestandteil eines Ultraschallwandlers ist zumindest ein piezoelektrisches Element, welches die Ultraschall-Meßsignale erzeugt und/oder empfängt.

Die in einem piezoelektrischen Element erzeugten Ultraschall-Meßsignale werden über den Koppelkeil bzw. den Vorlaufkörper und - im Falle eine Clamp-On Durchflußmeßgeräts - über die Rohrwand in das flüssige Medium geleitet. Da die Schallgeschwindigkeiten in einer Flüssigkeit und in Kunststoff voneinander verschieden sind, werden die Ultraschallwellen beim Übergang von einem Medium in das andere gebrochen. Der Brechungswinkel selbst bestimmt sich nach dem Snellius Gesetz, d.h der Brechungswinkel beim Übergang von einem Medium in ein anderes Medium ist abhängig von dem Verhältnis der Schallgeschwindigkeiten $c_m$, $c_n$ der beiden Medien n, m.

Mathematisch läßt sich das Snellius' Gesetz bevorzugt gemäß der nachfolgend genannten und gekürzten Formel darstellen:

$$c_n / \sin \alpha_n = c_m / \sin \alpha_m = const. \quad (1)$$

Hierbei repräsentiert:

$c_n$ : die Schallgeschwindigkeit z.B. im Koppelkeil, beispielsweise aus Kunststoff gefertigt ist;
$c_m$ : die Schallgeschwindigkeit z. B. im Medium, bei dem es sich beispielsweise um Wasser handelt;
$\alpha_n$ : den Winkel zwischen dem Schallpfad und dem senkrechten Lot auf die Grenzfläche des Koppelkeils beim Durchstoßpunkt des Ultraschall-Meßsignals durch die Grenzfläche;
$\alpha_m$ : den Winkel zwischen dem Schallpfad und dem senkrechten Lot auf die Grenzfläche des Mediums beim Durchstoßpunkt des Ultraschall-Meßsignals durch die Grenzfläche.

Mit Koppelkeilen bzw. Vorlaufkörpern aus Kunststoff läßt sich i.a. eine gute Impedanzanpassung erzielen; allerdings zeigt die Schallgeschwindigkeit von Kunststoff eine relativ starke Temperaturabhängigkeit. Typischerweise verändert sich die Schallgeschwindigkeit von Kunststoff von ca. 2500 m/s bei 25° C auf ca. 2200 m/s bei 130° C. Zusätzlich zu der durch die Temperatur hervorgerufenen Änderung der Laufzeit der Ultraschall-Meßsignale im Kunststoff des Koppelkeils, ändert sich auch die Ausbreitungsrichtung der Ultraschall-Meßsignale in dem strömenden Medium. Beide Änderungen wirken sich bei einem nach der Laufzeitdifferenz-Methode arbeitenden Ultraschall-Durchflußmeßgerät natürlich ungünstig auf die Meßgenauigkeit aus. Hinzu kommt, daß die Ausbreitungsgeschwindigkeit in gewissen Medien ebenfalls eine starke Temperaturabhängigkeit aufweist.

Die gattungsgemäße EP 1 235 056 A1 beschreibt eine Vorrichtung, wobei das verwendete Koppelkeil zweiteilig ist. Er weist ein erstes und zweites ultraschallankoppelndes Element auf. Diese Elemente können starr oder verformbar ausgebildet sein. Das erste ultraschallankoppelnde Element weist eine Schichtung aus mehreren Blatteinheiten bzw. Blattlagen auf, welche zugfeste Fasern aufweisen. Diese Fasern sind dabei in einem Kunstharz z.B. PEEK eingebettet. Das zweite ultraschallankoppelnde Element kann z.B. aus PUR (Polyurethan) bestehen. Somit sind beide ultraschallkoppeinde Elemente aus Kunststoff. Die Fasern bzw. Faserlagen dienen der Richtungsgebung einer eintretenden Ultraschallwelle Innerhalb des Koppelkeils. Der Kunststoff hingegen dient dabei zur Stütze der Fasern. Die zweiteilige Form des Koppelkeils wurde konstruktiv in der D1 gewählt um die gezackte Oberfläche bereitzustellen, mit der hohen Anzahl an Flächen. Die Funktion der gezackten Oberfläche besteht darin, dass im Wesentlichen keine Refraktion an diesen Flächen erfolgt.

Die US 3 913 386 A offenbart eine Vorrichtung, gemäß Oberbegriff des Anspruchs 1 und ein Verfahren zur Kompensation eines Brechungswinkels eines Ultraschallsignals. Dabei soll die Ausbreitungsgeschwindigkeit einer Ultraschallwelle in dem Medium, hier einem Koppelkeil, invers variieren zu einer Temperaturfunktion. Konkret wird in diesem Dokument hierfür vorgeschlagen eine Art "Wassereinschluss" bzw. eine keilförmige Wasserblase zu nutzen, die innerhalb eines Koppelkeils angeordnet ist.

Um die Temperaturabhängigkeit der Koppelkeile in den Griff zu bekommen, ist es aus der WO 02/39069 A2 bekannt geworden, das Koppelelement aus mehreren kreisbogenförmigen Segmenten auszubauen. Bevorzugt sind die Segmente aus Metall gefertigt. Die einzelnen Segmente sind getrennt voneinander angeordnet und verlaufen von einer Kontaktebene, die dem piezoelektrischen Element zugewandt ist, bis zu einer Grundplatte, die mit der Rohrwand in Verbindung steht. Die Länge der einzelnen Segmente ist dabei so bemessen, daß die Ultraschall-Meßsignale an der Grundplatte unter einem vorgegebenen Winkel abgestrahlt bzw. empfangen werden. Diese Ausgestaltung ist jedoch relativ aufwendig.

Der Erfindung liegt die Aufgabe zugrunde, ein Clamp-On Ultraschallmeßgerät vorzuschlagen, dessen Meßgenauigkeit relativ unempfindlich auf Temperaturänderungen des Mediums und/oder der Umgebung reagiert.

Die Aufgabe wird gelöst, durch eine Vorrichtung, gemäß Anspruch 1, wobei das Koppelelement zumindest zwei Teilelemente aufweist, die derart ausgestaltet und/oder angeordnet sind, daß der vorgegebene Einkoppelwinkel in das Behältnis bzw. der vorgegebene Auskoppelwinkel aus dem Behältnis in einem ausgedehnten Temperatur-bereich näherungsweise unabhängig von der Temperatur des Koppelkeiles ist. Unter ausgedehntem Temperaturbereich ist im Zusammenhang mit der erfindungsgemäßen Lösung zumindest der Temperaturbereich von ca. 0° C bis 130° C zu verstehen.

Eine vorteilhafte Weiterbildung der erfindungsgemäßen Vorrichtung bezieht sich auf den Fall, daß die Schallgeschwindigkeit des Meßmediums selbst eine relativ starke Temperaturabhängigkeit aufweist und daß sich die Temperatur des Meßmediums wie die Temperatur des Koppelkeiles ändert. Hier ist - in Einklang mit dem Snellius' Gesetz - der Einkoppel- bzw. der Auskoppelwinkel der Ultraschall-Meßsignale von der Temperaturabhängigkeit der Schallgeschwindigkeit des Mediums mitbestimmt. Um den Einkoppel- bzw. den Auskoppelwinkel in das Medium bzw. aus dem Medium erfindungsgemäß in einem ausgedehnten Temperaturbereich näherungsweise konstant zu halten, sind die Materialien und die Dimensionen der zumindest zwei Teilelemente des Koppelelements so gewählt, daß quasi keine Änderung des Einstrahl-/Ausstrahlwinkels auftritt, die das Meßergebnis innerhalb gewünschter Toleranzgrenzen negativ beeinflussen würde. Bei dieser Lösung handelt es sich also um eine mediums-spezifische Lösung.

Bei der erfindungsgemäßen Vorrichtung besteht das Koppelelement aus zumindest zwei Koppelkeilen, die sukzessive von den Ultraschall-Meßsignalen durchlaufen werden. Erfindungsgemäß sind die Koppelkeile aus Kunststoffen mit unterschiedlichen Schallgeschwindigkeiten gefertigt.

Die Teilelemente bzw. die Koppelkeile bestehen gemäß einer vorteilhaften Ausgestaltung der erfindungsgemäßen Vorrichtung aus unterschiedlichen Materialien, wobei die Materialien so gewählt sind, daß durch Temperaturänderungen verursachte Änderungen der Schallgeschwindigkeit bzw. des Brechungsindex' des Materials von einem ersten Teilelement bzw. von einem ersten Koppelkeil durch Temperaturänderungen verursachte Änderungen der Schallgeschwindigkeit bzw. des Brechungsindex' von zumindest einem zweiten Teilelement bzw. einem zweiten Koppelkeil näherungsweise kompensiert werden. Bevorzugt erfolgt die Kompensation in einem möglichst großen Temperaturbereich.

Gemäß einer alternativen Ausgestaltung der erfindungsgemäßen Vorrichtung sind mehrere Teilelemente bzw.

mehrere miteinander verbundene Koppelteile aus unterschiedlichen Materialien vorgesehen, wobei die Materialien so gewählt sind, daß sich durch Temperaturänderungen verursachte Änderungen der Schallgeschwindigkeit bzw. des Brechungsindex' des Mediums und durch Temperaturänderungen verursachte Änderungen der Schallgeschwindigkeiten bzw. der Brechungsindizes in den zumindest zwei Teilelementen bzw. Koppelkeilen näherungsweise gegenseitig kompensieren.

Mit dieser Ausgestaltung läßt sich der Einfluß von Temperaturschwankungen des Mediums auf den Einkoppelbzw. den Auskoppelwinkel unmittelbar eliminieren bzw. in den Auswirkungen so gering halten, daß sich die Meßgenauigkeit nur unwesentlich verschlechtert.

Gemäß einer vorteilhaften Ausgestaltung der erfindungsgemäßen Vorrichtung ist vorgesehen, daß die Weglängen, die die Ultraschall-Meßsignale in den Teilelementen der Koppelteile bzw. der Vorlaufkörper zurücklegen, so gewählt sind, daß die Summe der entsprechenden Laufzeiten, die die Ultraschall-Meßsignale für das Durchlaufen der Teilelemente benötigen, über einen vorgegebenen Temperaturbereich zumindest näherungsweise konstant ist.. Erreicht wird dies bevorzugt durch die entsprechend gewählte Dimensionierung der Teilelemente. Durch diese Ausgestaltung wird gewährleistet, daß nahezu unabhängig von Temperaturänderungen von jedem Ultraschall-wandler stets die maximale Signalamplitude eines Ultraschall-Meßsignals empfangen wird. Mehr oder weniger aufwendige Nachjustierungen der Ultraschallwandler am Rohr aufgrund von Temperaturänderungen in den Sensoren sind daher nicht erforderlich.

Die Erfindung wird anhand der nachfolgenden Zeichnungen näher erläutert. Es zeigt:

Fig. 1:    eine schematische Darstellung eines Clamp-On Ultraschall-Durchflußmeßgeräts in Zwei-Traversen-Anordnung 2;

Fig. 2:    einen Längsschnitt durch eine Ausführungsform des erfindungsgemäßen Ultraschallwandlers; und

Fig. 3:    eine graphische Darstellung des Einkoppel-/Auskoppelwinkels in Abhängigkeit von der Temperatur mit und ohne Kompensation.

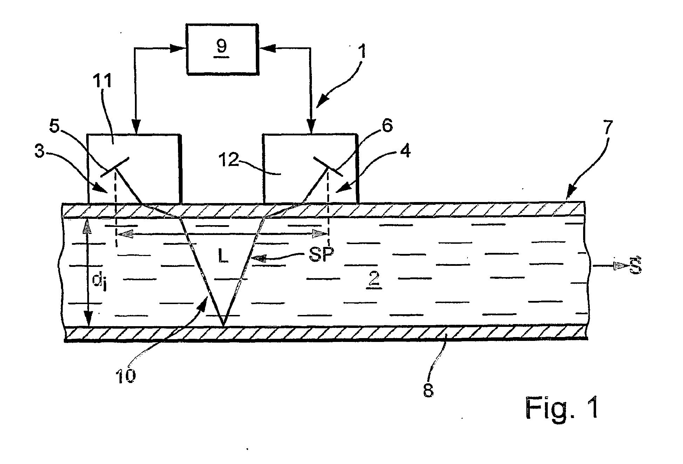

In Fig. 1 ist schematisch ein Clamp-On Durchflußmeßgerät 1 in der Zwei-Traversen-Anordnung 10 dargestellt. Das Durchflußmeßgerät 1 ermittelt den Volumendurchfluß und/oder den Massendurchfluß des Mediums 10 in dem Rohr 7 nach der bekannten Laufzeitdifferenz-Methode.

Wesentliche Komponenten des Clamp-On Ultraschall-Durchflußmeßgeräts 1 sind die beiden Ultraschallwandler 3, 4 und die Regel-/Auswerteeinheit 9. Die beiden Ultraschallwandler 3, 4 sind mittels einer in der Fig. 1 nicht gesondert dargestellten Befestigungsvorrichtung an dem Rohr 7 angebracht. Entsprechende Befestigungsvorrichtungen sind aus dem Stand der Technik hinlänglich bekannt und werden auch von der Anmelderin angeboten und vertrieben. Das Rohr 7 mit einem vorgegebenen Innendurchmesser $di$ wird von dem Medium 2 in Strömungsrichtung S durchströmt.

Ein Ultraschallwandler 3; 4 umfaßt als wesentliche Bestandteile zumindest ein piezoelektrisches Element 5; 6, das die Ultraschall-Meßsignale erzeugt und/oder empfängt, und einen Koppelteil bzw. einen Vorlaufkörper 11; 12. Die Ultraschall-Meßsignale werden über die Koppelteile 11, 12 in das vom Medium 10 durchströmte Rohr 7 eingekoppelt bzw. aus dem Rohr 7 ausgekoppelt. Die Koppelteile 11; 12 legen die Einstrahl- bzw. Ausstrahlrichtung der Ultraschall-Meßsignale aus dem Rohr bzw. aus dem Medium fest; darüber dienen sie zur Optimierung der Impedanzanpassung der Ultraschall-Meßsignale beim Übergang in das Rohr 7 bzw. aus dem Rohr 7.

Die beiden Ultraschallwandler 3, 4 sind in einem Abstand L voneinander positioniert, wobei der Abstand L so gewählt ist, daß ein möglichst hoher Energieanteile der von einem Ultraschallwandler 3; 4 ausgesendeten Ultraschall-Meßsignale in dem jeweils anderen Ultraschallwandler 4; 3 empfangen wird. Die optimale Positionierung ist abhängig von einer Vielzahl unterschiedlicher System- und/oder Prozeßgrößen. Bei diesen System- und Prozeßgrößen handelt es sich beispielsweise um den Innendurchmesser $di$ des Rohres 7, um die Dicke der Rohrwand 8, um die Schallgeschwindigkeit $c_3$ des Materials, aus dem das Rohr 7 gefertigt ist, oder um die Schallgeschwindigkeit $c_4$ des Mediums 10. Hinzu kommt, daß die Schallgeschwindigkeiten in den unterschiedlichen Materialien wie Koppelteil, Rohrwand und Medium eine mehr oder minder starke Temperaturab-hängigkeit aufweisen.

Im gezeigten Fall ist der Abstand L der beiden Ultraschallwandler 3, 4 so bemessen, daß sich die Ultraschall-Meßsignale, die entsprechend der Laufzeitdifferenz-Methode abwechselnd von den beiden Ultraschallwandlern 3, 4 ausgesendet und empfangen werden, über den Schallpfad SP in dem vom Medium 10 durchströmten Rohr 7 ausbreiten. Der Schallpfad SP weist zwei Traversen, also zwei Querungen des Rohres 7 auf. Die Traversen können diametral oder kordial verlaufen.

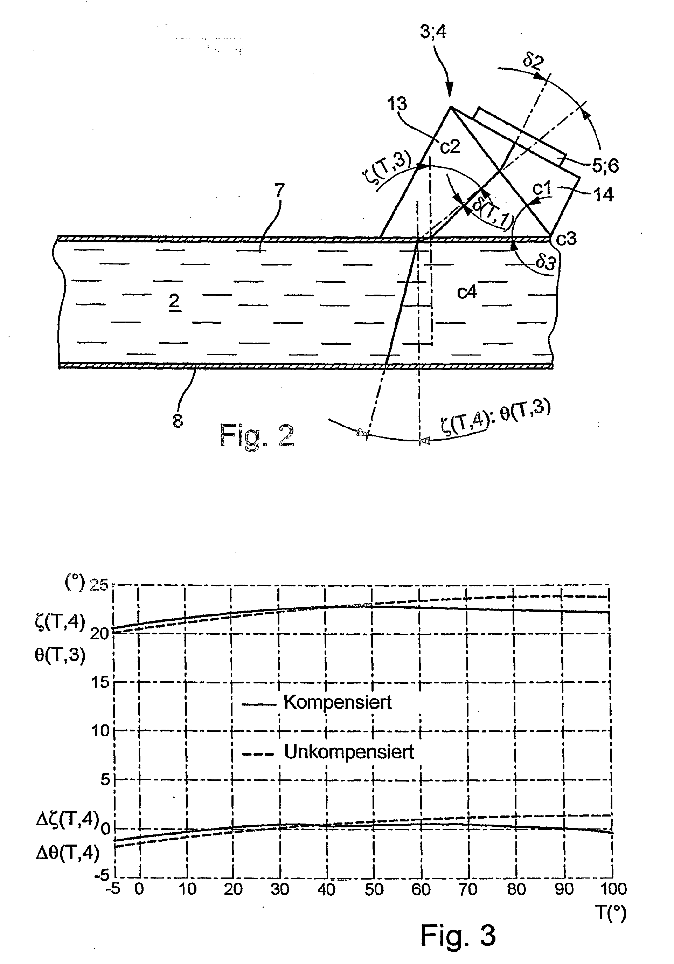

Fig. 2 zeigt eine Ausführungsform des erfindungsgemäßen Ultraschallwandlers 3; 4 im Schnitt. Das Koppelelement 11; 12 besteht erfindungsgemäß aus zumindest zwei Teilelementen 13, 14, die sukzessive von den Ultraschall-Meßsignalen, die von dem piezoelektrischen Element 5; 6 gesendet bzw. empfangen werden, durchlaufen werden.

Betrachten wir zuerst den Fall, daß die Ultraschall-Meßsignale lediglich über das Teilelement 13 in das Rohr 7 eingekoppelt bzw. aus dem Rohr 7 ausgekoppelt werden. Der Einkoppel-/Auskoppelwinkel ist im wesentlichen durch die Geometrie des Teilelements 13 bestimmt, d.h. die Geometrie des Teilelements 13 ist so gewählt, daß möglichst viel Energie die Grenzfläche zwischen dem Teilelement 12 und dem vom Medium 2 durchströmten Rohr passiert. Die Einkopplung bzw. Auskopplung eines hohen Energieanteils des Ultraschall-Meßsignals ist für eine gute Meßgenauigkeit von ausschlaggebender Wichtigkeit. Um die verläßlichen Meßergebnisse über einen beliebig langen Zeitraum zu erzielen, ist es außerdem wichtig, daß ein festgelegter optimierter Einkoppel-/Auskoppelwinkel nachfolgend auch konstant bleibt. Wie gesagt, führt jede Abweichung von dem vorgegebenen Wert zu einer Verschlechterung der Meßgenauigkeit. Problematisch ist eine permanente Konstanthaltung des Einstrahl-/Ausfallwinkels insbesondere deshalb, weil sich die Schallgeschwindigkeiten in den unterschiedlichen Materialien mehr oder weniger ausgeprägt in Abhängigkeit von der Temperatur ändern.

An dieser Stelle setzt die erfindungsgemäße Lösung ein: Durch Hinzufügen eines zweiten Teilelements 14, dessen Schallgeschwindigkeit von der Schallgeschwindigkeit des ersten Teilelements 13 differiert, läßt sich die Temperaturabhängigkeit des Koppelelements 11; 12 bzw. des Vorlaufkörpers zumindest näherungsweise - und im Idealfall gänzlich - kompensieren. Selbstverständlich kann das erfindungsgemäße Koppelelement 11; 12 auch aus mehr als zwei Teilelementen 13, 14 aufgebaut sein. Diese können so ausgeführt sein, daß der temperaturabhängige Brechungswinkel eines einzelnen Teilelements 13; 14 entgegengesetzt zu der Summe der temperaturabhängigen Brechungswinkel aller verbleibenden Teilelemente des Koppelelements 11; 12 ist.

Vom Prinzip her gleich gelagert ist der Fall, daß zusätzlich zur Temperaturabhängigkeit der Schallgeschwindigkeiten des Koppelelements 11, 12 auch die Schallgeschwindigkeit des Mediums 2 eine starke Temperaturabhängigkeit aufweist. Beispielhaft sei an dieser Stelle Wasser als Medium 2 genannt. Bei einer derartigen Anwendung ist das aus zumindest zwei Teilelementen 13, 14 bestehende Koppelelement 11; 12 so auszugestalten, daß es den Einfluß von Temperaturänderungen des Wassers auf den Einkoppel- bzw. Auskoppelwinkel der Ultraschall-Meßsignale über einen entsprechend großen Temperaturbereich zumindest näherungsweise kompensiert.

Um die passenden Winkel in den Teilelementen 13, 14 des Koppelelements 11; 12 zu ermitteln, kann der Schallpfad SP für einen Temperaturbereich oder für einzelne Referenztemperaturen (im dargestellten Fall: 25°C) ausgerechnet und der Einstrahl-/Ausfallwinkel im zu messenden Medium, z.B. in Wasser, auf einem möglichst konstanten Wert gehalten werden. Weiterhin ist auch die Eintrittsposition in das zu messende Medium 2 bzw. die Austrittsposition aus dem zu messenden Medium von den Einstrahl-/Ausfallwinkeln in den Teilelementen 13, 14 abhängig. Um den Temperatureinfluß in den Ultraschallwandlern 3, 4 möglichst klein zu halten, werden die Teilelemente 13, 14 derart dimensioniert, daß die Summe der Laufzeiten der Ultraschall-Meßsignale durch die Teilelemente 13, 14 der Ultraschallwandler 3, 4 über einen weiten Temperaturbereich konstant ist.

Mathematisch läßt sich die Abhängigkeit der Schallgeschwindigkeit c eines Mediums *n* von der Temperatur in erster Näherung gemäß der nachfolgenden Gleichung (1) darstellen:

$$c_{T,n} = c_{25°C} + \Delta c \; T \quad (2)$$

Als Bezugswert für die Temperaturänderung der Schallgeschwindigkeit wird üblicherweise die Schallgeschwindigkeit des Mediums n bei 25°C genommen. $\Delta c$ kennzeichnet in der Formel die Änderung der Schallgeschwindigkeit c in Abhängigkeit von der Temperatur T.

Unter sukzessiver Anwendung des Snellius' Gesetzes läßt sich der Einkoppel-/Auskoppelwinkel $\zeta$ in das im Rohr strömende Mediums (n = 4) mittels der nachfolgenden Formel berechnen:

$$\zeta_{T,4} = a\sin\left( \frac{c_{T,4}}{c_{T,2}} \; \sin\left( \delta_3 - a\sin\left( \frac{c_{T,2}}{c_{T,1}} \; \sin \delta_2 \right) \right) \right) \quad (3)$$

Hierbei kennzeichnet T die Temperatur;

c(T,n) charakterisiert die Schallgeschwindigkeit in den unterschiedlichen Materialien, wobei die Zahlen n = 1 ... 4 folgendes kennzeichnen:

1: den Kompensationskeil bzw. das zweite Teilelement 14;
2: den Koppelkeil bzw. das erste Teilelement 13;
3: die Rohrwand 8;

4: das in dem Rohr 7 strömende Medium 2.

$\delta_2$ kennzeichnet den Winkel des Kompensationskeils 14 und
$\delta_3$ Winkel des Koppelkeils

Ist die Temperatur des Mediums konstant oder kann die Änderung der Schallgeschwindigkeit im Medium über die Temperatur vernachlässigt werden, so gilt die nachstehend genannte Formel:

$$\frac{\sin\left(\delta_3 - a\sin\left(\frac{c_{T,2}}{c_{T,1}}\ \sin\delta_2\right)\right)}{c_{T,2}} = const.(T) \quad (4)$$

Hierbei kennzeichnet T die Temperatur;

c(T,1) charakterisiert die Schallgeschwindigkeit im Kompensationskeil bzw. im zweiten Teilelement 14;
c(T,2): charakterisiert die Schallgeschwindigkeit im Koppelkeil bzw. im ersten Teilelement 13;
$\delta_2$ kennzeichnet den Winkel des Kompensationskeils und
$\delta_3$ Winkel des Koppelkeils

Fig. 3 zeigt in graphischer und anschaulicher Art und Weise eine Darstellung, wie mittels der erfindungsgemäßen Lösung der Einfluß der Temperatur auf den Einkoppel- bzw. Auskoppelwinkel $\zeta$ in das bzw. aus dem Medium näherungsweise kompensiert wird. Insbesondere charakterisiert die durchgezogene Linie die Temperaturabhängigkeit des Einkoppel- bzw. Auskoppelwinkels $\zeta$ des Ultraschall-Meßsignals in das Medium 2 mit Kompensation; die gestrichelte Linie zeigt die entsprechende Temperaturabhängigkeit des Einkoppel- bzw. Auskoppelwinkels $\theta$ ohne die erfindungsgemäße Kompensation. $\theta$(T,3) charakterisiert die entsprechende Winkeländerung, die bei einem Koppelelement 13 ohne zusätzlichen Kompensationskeil 14 auftritt. $\Delta\zeta$ (T,4) ist die Abweichung über die Temperatur von $\zeta$ (T,4) zu einem Einstrahlwinkel bei 25°C. Das gemessene Medium 2 ist übrigens im dargestellten Fall Wasser. Das erste Teilelement 13 besteht aus einem Kunststoff mit der Schallgeschwindigkeit c (25°C,1) von 2668 m/s und $\Delta c_1$ = -4. 5 m/s/K. Bei dem Material des zweiten Teilelements 14 handelt es sich um einen Kunststoff mit der Schallgeschwindigkeit c (25°C,2) von 2451 m/s und $\Delta c_2$ = -0.73 m/s/K. Anhand der Kurven zeigt sich, daß in dem Temperaturbereich von 0° C bis 100° C durch das erfindungsgemäße Hinzufügen des zweiten Teil-elements 14 (→Kompensationskeil) die Temperaturabhängigkeit des Einstrahl-/Ausfallwinkels $\zeta$ in das Medium 2 nahezu kompensiert wird. Näherungsweise ist der Einstrahl-/Ausfallwinkel $\zeta$ über den gesamten Temperaturbereich, in dem das Ultraschall-Durchflußmeßgerät 1 zum Einsatz kommt/kommen kann, konstant.

**Bezugszeichenliste**

1 Clamp-On Ultraschall-Durchflußmeßgerät
2 Medium
3 Ultraschallwandler
4 Ultraschallwandler
5 Piezoelektrisches Element
6 Piezoelektrisches Element
7 Rohr / Behältnis
8 Rohrwand
9 Regel-/Auswerteeinheit
10
11 Koppelelement / Vorlaufkörper
12 Koppelelement / Vorlaufkörper
13 Erstes Teilelement
14 Zweites Teilelement

**Patentansprüche**

1. Vorrichtung zur Bestimmung und/oder Überwachung des Volumen- und/ oder Massenstroms eines Mediums in einem Behältnis, insbesondere in einem Rohr, mit zumindest einem Ultraschallwandler, der Ultraschall-Meßsignale aussendet und/oder empfängt, mit einem dem Ultraschallwandler zugeordneten Koppelelement, das zumindest zwei Teilelemente (13, 14) aufweist und über das die Ultraschall-Meßsignale unter einem vorgegebenen Einkoppel- bzw. Auskoppelwinkel in das Behältnis eingekoppelt bzw. aus dem Behältnis ausgekoppelt werden, und mit einer Regel-/Auswerteeinheit, die anhand der Meßlgnale bzw. anhand von Meßdaten, die aus den Meßsignalen abgeleitet sind, den Volumen- und/oder den Massenstrom des in dem Meßrohr strömenden Mediums ermittelt, daß die zumindest zwei Teilelemente (13, 14) derart ausgestaltet und/oder angeordnet sind, daß der Einfluß von Temperaturänderungen auf den vorgegebenen Einkoppelwinkel ($\zeta$) in das Behältnis (7) bzw. auf den vorgegebenen Auskoppelwinkel ($\zeta$) aus dem Behältnis (7) in einem vorgegebenen bzw. ausgedehnten Temperaturbereich näherungsweise kompensiert wird **dadurch gekennzeichnet,** **daß** die Teilelemente (13, 14) aus Kunststoff gefertigt sind.

2. Vorrichtung nach Anspruch 1, **dadurch gekennzeichnet,** **daß** für den Fall, daß der Einkoppel- bzw. der Auskoppelwinkel ($\zeta$) der Ultraschall-Meßsignale von der Temperaturabhängigkeit des Mediums (2) mitbestimmt ist, die Teilelemente (13, 14) des Koppelelements (11, 12) derart ausgestaltet und/oder angeordnet sind, daß der Einkoppel- bzw. der Auskoppelwinkel ($\zeta$) in das Medium (2) bzw. aus dem Medium (2) in einem ausgedehnten Temperaturbereich näherungsweise konstant ist.

3. Vorrichtung nach Anspruch 1, **dadurch gekennzeichnet,** **daß** es sich bei den Teilelementen (13, 14) um Koppelkeilen handelt, die sukzessive von den Ultraschall-Meßsignalen durchlaufen werden.

4. Vorrichtung nach Anspruch 1, 2 oder 3, **dadurch gekennzeichnet,** **daß** die Teilelemente (13, 14), bzw. die Koppelkeile aus unterschiedlichen Materialien bestehen, wobei die Materialien so gewählt sind, daß durch Temperaturänderungen verursachte Änderungen der Schallgeschwindigkeit ($c_2$) bzw. des Brechungsindex' des Materials von einem ersten Teilelement (13) bzw. von einem ersten Koppelkeil durch Temperaturänderungen verursachte Änderungen der Schallgeschwindigkeit ($c_1$) bzw. des Brechungsindex' von zumindest einem zweiten Teilelement (14) bzw. einem zweiten Koppelkeil näherungsweise kompensiert werden.

5. Vorrichtung nach Anspruch 1 oder 2, **dadurch gekennzeichnet,** **daß** mehrere Teilelemente (13, 14) bzw. die Koppelkeile aus unterschiedlichen Materialien vorgesehen sind, wobei die Materialien so gewählt sind, daß sich durch Temperaturänderungen verursachte Änderungen der Schallgeschwindigkeit bzw. des Brechungsindex des Mediums (2) und durch Temperaturänderungen verursachte Änderungen der Schallgeschwindigkeiten bzw. der Brechungsindizes in den zumindest zwei Teilelementen (13, 14) bzw. Koppelkeilen näherungsweise gegenseitig kompensieren.

6. Vorrichtung nach Anspruch 1 oder 2, **dadurch gekennzeichnet,** **daß** die Dimensionen der Tellelemente (13, 14) bzw. die Weglängen, die die Ultraschall-Meßsignale in den Teilelementen (13, 14) der Koppelkeile (11, 12) bzw. der Vorlaufkörper zurücklegen, so gewählt sind, daß die Summe der entsprechenden Laufzeiten, die die Ultraschall-Meßsignale für das Durchlaufen der Teilelemente (13, 14) benötigen, über einen vorgegebenen Temperaturbereich zumindest näherungsweise konstant ist.

**Claims**

1. Unit designed for determining and/or monitoring the volume flow and/or mass flow of a medium in a container, particularly in a tube, with at least one ultrasonic converter which emits and/or receives ultrasonic measuring signals, with a coupling element assigned to the ultrasonic converter, which has at least two subcomponents (13, 14) and via which the ultrasonic measuring signals are injected into the container or coupled out of the container at a predefined angle of injection or angle of decoupling respectively, and with a control/evaluation unit which uses the measuring signals or the measurement data derived from the measuring signals to determine the volume flow and/or the mass flow of the medium flowing in the measuring tube,
the at least two subcomponents (13, 14) are designed and/or arranged in such a way that the influence of temperature changes on the predefined angle of injection ($\zeta$) into the container (7) and on the predefined angle of decoupling ($\zeta$) out of the container (7) is approximately compensated in a predefined or extended temperature range,
**characterized in that**
the subcomponents (13,14) are made of plastic.

2. Unit as claimed in Claim 1,
**characterized in that**
in the case that the angle of injection ($\zeta$) and the angle of decoupling ($\zeta$) of the ultrasonic measuring signals are co-determined by the temperature dependence of the medium (2), the subcomponents (13, 14) of the coupling element (11, 12) are designed and/or arranged in such a way that the angle of injection ($\zeta$) into the medium (2) or the angle of decoupling ($\zeta$) out of the medium (2) is approximately constant in an extended temperature range.

3. Unit as claimed in Claim 1,
**characterized in that**
the subcomponents (13, 14) are coupling wedges through which the ultrasonic measuring signals successively pass.

4. Unit as claimed in Claim 1, 2 or 3,
**characterized in that**
the subcomponents (13, 14) or the coupling wedges are made from different materials, wherein the materials are selected in such a way that changes to the sonic velocity ($c_2$) or the refractive index' of the material of a first subcomponent (13) or a first coupling wedge, caused by temperature changes, are approximately compensated by changes to the sonic velocity ($c_1$) or the refractive index' of at least a second subcomponent (14) or a second coupling wedge, caused by temperature changes.

5. Unit as claimed in Claim 1 or 2,
**characterized in that**
multiple subcomponents (13, 14) or coupling wedges made of different material are provided, wherein the materials are selected in a such a way that changes to the sonic velocity or the refractive index of the medium (2), caused by temperature changes, and changes to the sonic velocities or refractive indexes in the at least two subcomponents (13, 14) or coupling wedges, caused by temperature changes, mutually compensate one another approximately.

6. Unit as claimed in Claim 1 or 2,
**characterized in that**
the dimensions of the subcomponents (13, 14) or the path lengths that the ultrasonic measuring signals travel in the subcomponents (13, 14) of the coupling wedges (11, 12) or lead-in members are selected in such a way that the sum of the times of flight which the ultrasonic measuring signals need to pass through the subcomponents (13, 14) is at least approximately constant over a predefined temperature range.

**Revendications**

1. Dispositif destiné à la détermination et/ou à la surveillance du débit volumique et/ou massique d'un produit dans un réservoir, notamment dans un tube, avec au moins un convertisseur ultrasonore, qui émet et / reçoit des signaux de mesure ultrasonores, avec un élément de couplage affecté au convertisseur ultrasonore, lequel élément est composé de deux sous-éléments (13, 14) et par l'intermédiaire duquel les signaux de mesure ultrasonores sont couplés dans le réservoir et couplés hors du réservoir selon un angle prédéfini de couplage d'entrée et de couplage de sortie, et avec une unité de régulation / d'exploitation, qui détermine sur la base des signaux de mesure ou sur la base de données de mesure, qui sont dérivées des signaux de mesure, le débit volumique et/ou massique du produit s'écoulant dans le tube de mesure,
que les au moins deux sous-éléments (13, 14) sont conçus et/ou disposés de telle manière que l'influence de variations de température sur l'angle prédéfini de couplage d'entrée ($\zeta$) dans le réservoir (7) et sur l'angle prédéfini de couplage de sortie ($\zeta$) hors du réservoir (7) est approximativement compensée dans une plage de températures prédéfinie et étendue,
**caractérisé en ce**
**que** les sous-éléments (13,14) sont en matière plastique.

**2.** Dispositif selon la revendication 1,
**caractérisé en ce**
**que** pour le cas où l'angle de couplage d'entrée ($\zeta$) et l'angle de couplage de sortie ($\zeta$) des signaux de mesure ultrasonores sont codéterminés par la dépendance de température du produit (2), les sous-éléments (13, 14) de l'élément de couplage (11, 12) sont conçus et/ou disposés de telle manière que l'angle de couplage d'entrée ($\zeta$) dans le produit (2) et l'angle de couplage de sortie ($\zeta$) hors du produit (2) sont approximativement constants dans une plage de températures étendue.

**3.** Dispositif selon la revendication 1,
**caractérisé en ce**
**que**, concernant les sous-éléments (13, 14), il s'agit de pièces de couplage qui sont parcourues successivement par les signaux de mesure ultrasonores.

**4.** Dispositif selon la revendication 1, 2 ou 3,
**caractérisé en ce**
**que** les sous-éléments (13, 14) ou les pièces de couplage sont constitués de matériaux différents, ces derniers étant choisis de telle manière à ce que les changements de la vitesse du son (c2) ou de l'indice de réfraction du matériau d'un premier sous-élément (13) ou d'un premier élément de couplage, dus à des variations de température, sont compensés approximativement par les changements de la vitesse du son (c1) ou de l'indice de réfraction d'un deuxième sous-élément (14) ou d'un deuxième élément de couplage, dus à des variations de température.

**5.** Dispositif selon la revendication 1 ou 2,
**caractérisé en ce**
**que** plusieurs sous-éléments (13, 14) ou les éléments de couplage sont prévus en matériaux différents, ces derniers étant choisis de telle manière à ce que les changements de la vitesse du son ou de l'indice de réfraction du produit (2), dus à des variations de température, sont approximativement compensés réciproquement par les changements de la vitesse du son ou de l'indice de réfraction, dus à des variations de température, dans les au moins deux sous-éléments (13, 14) ou les éléments de couplage.

**6.** Dispositif selon la revendication 1 ou 2,
**caractérisé en ce**
**que** les dimensions des sous-éléments (13, 14) ou les trajets libres, que parcourent les signaux de mesure ultrasonores dans les sous-éléments (13, 14) des pièces de couplage (11, 12) ou des avant-corps, sont choisies de telle manière que la somme des temps de propagation correspondants, nécessaires pour que les signaux de mesure ultrasonores parcourent les sous-éléments (13, 14), est au moins approximativement constante dans une plage de températures prédéfinie.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US PS4484478 A
- US PS4598593 A
- EP 1235056 A1
- US 3913386 A
- WO 0239069 A2